# EUROPEAN PATENT SPECIFICATION

(11) **EP 3 829 146 B1**
(45) Date of publication and mention of the grant of the patent: **28.10.2026**
(21) Application number: 20176714.2
(22) Date of filing: 27.05.2020
(51) Int. Cl.: H04M 1/02, G06F 1/16, G02B 6/42, G02B 6/00, F21V 8/00

(54) **CAMERA LENS BEHIND THE DISPLAY OF A MOBILE TERMINAL CONNECTED TO THE FRONT SIDE BY A LIGHT GUIDE**
KAMERALINSE HINTER DEM DISPLAY EINES MOBILEN ENDGERÄTES, DAS ÜBER EINEN LICHTLEITER MIT DER VORDERSEITE VERBUNDEN IST
OBJECTIF DE CAMÉRA DERRIÈRE L'ÉCRAN D'UN TERMINAL MOBILE RACCORDÉ À LA FACE AVANT PAR UN CONDUCTEUR DE LUMIÈRE

(30) Priority: 29.11.2019 CN 201911204615
(43) Date of publication of application: 02.06.2021
(73) Proprietor: Beijing Xiaomi Mobile Software Co., Ltd., Beijing 100085 (CN)
(72) Inventor: HU, Xiankun, Haidian District Beijing 100085 (CN)
(74) Representative: dompatent

(56) References cited:
- WO-A1-2017/075005
- CN-A- 108 415 514
- US-A1- 2007 041 723

## Description

### TECHNICAL FIELD

The present disclosure relates to the technical field of mobile terminals, and in particular, to a terminal device.

### BACKGROUND

In order to increase a screen-to-body ratio, i.e., a ratio of the area of a display region to the area of the entire front panel of the terminal device, in a terminal device, a front camera is often placed below a display panel to reduce the area occupied by the front camera.

CN108415514A shows an electronic device which may be a mobile communication terminal (mobile phone) and includes a front panel and a rear. The casing, the front panel and the rear panel constitute the body of the electronic device. The front panel and the rear casing are connected to form a hollow cavity. The main board, the battery, the sensor and the like of the electronic device are disposed in the hollow cavity. The front panel includes a display area and a non-display area, wherein the display area occupies most of the front panel for displaying information to the user and receiving input information of the user. The light transmissive region is a hole-shaped region and abuts against the edge of the non-display region of the front panel. The camera assembly is located in a cavity formed by the front panel and the rear case and is located at a corresponding position of the display area. The electronic device further includes: a light transmitting area and a light guiding element, wherein the light transmitting area is located at the front panel The non-display area is for transmitting light; the light guiding element is located between the light transmitting area and the photosensitive element, and includes a first end corresponding to the light transmitting area and a second end corresponding to the photosensitive element For conducting light transmitted through the light transmissive region to the photosensitive element. The first end of the light guiding element corresponds to the light transmitting area. Thus, the light enters the light guiding element through the light transmitting region, and the light is transmitted to the lens of the camera assembly through the conduction of the light guiding element. Through the lens, the light enters the inside of the camera assembly, and the photosensitive element is imaged to realize the camera features.

WO2017075005A1 shows a multipurpose port disposed on a mobile phone. The port includes an entry point disposed on the outer casing associated with the mobile device. The port can be disposed on the front. The entry point of the port is configured to receive a first light beam and to emit a second light beam, where a frequency associated with the first light beam and the second light beam spans the full frequency range of the electromagnetic spectrum. According to a placement of the multipurpose port inside the mobile device, element is the outer casing associated with the mobile device, element is the glass associated with the mobile device, and element is the touch display module associated with the mobile device. The port includes a light guide, and a plurality of sensors associated with an exit point of the port. The light guide transmits a signal between an entry point and an exit point associated with the light guide. The entry point is disposed on an outer surface associated with the mobile device, while the exit point is disposed inside the mobile device. The light guide can take on any shape connecting the entry, and the exit point on the circuit board associated with the mobile device, beneath the display associated with the mobile device, on a pixel in a camera associated with the mobile device, etc. The light guide can comprise a lens associated with either the entry point or the exit point. The lens can be a short focal length lens, or a long focal length optical lens. The plurality of sensors are coupled to the light guide. The plurality of sensors are configured to detect a plurality of properties associated with the signal, such as a frequency, an intensity, a change in the frequency, a change in the intensity, a time of flight associated with the signal, etc. The plurality of sensors can emit and receive light.

However, the prior arts do not describe how to configure the photosensitive elements for effective light collection.

### SUMMARY

Various embodiments of the present disclosure provide a terminal device, which is beneficial to increase the screen-to-body ratio of the terminal device. The invention is set out in the appended set of claims.

The technical solutions provided by the embodiments of the present disclosure may include the following benefits.

By providing an optical fiber in the terminal device and arranging one end of the light transmitting element to be connected to the lens of the camera and the other end thereof to be opposite to the light transmitting hole of the cover plate, the external image can be transmitted, by the optical fiber, to the lens of the camera so as to complete the light path design of the front camera. Meanwhile, the display panel is parallel to the cover plate, and an orthographic projection of the camera onto the cover plate is located within an orthographic projection of the display panel onto the cover plate, that is, the camera is located below the display panel, as such, the display panel can be used to shield the camera and there is no need to dispose a light shielding area on the cover to shield the camera, thereby reducing the area of the light shielding area and increasing the screen-to-body ratio of the terminal device. And, the bottom plate has a mounting hole which is close to a side wall of the support frame, the optical fiber passes through the mounting hole, and the second end of the optical fiber is between the side wall of the support frame and the display panel, and thus the arrangement of the mounting hole and the optical fiber cause little impact on the connection between the cover plate and the support frame. Therefore, the way the cover plate and support frame are assembled can be nearly unaltered, facilitating the connection between the cover plate and the support frame.

### BRIEF DESCRIPTION OF THE DRAWINGS

In order to describe the technical solutions in the embodiments of the present disclosure more clearly, the following briefly introduces the accompanying drawings required for describing the embodiments. Apparently, the accompanying drawings in the following description show merely some embodiments of the present disclosure, and a person of ordinary skill in the art may also derive other drawings from these accompanying drawings without creative efforts.
FIG. 1 is a schematic front view structural diagram of a terminal device according to an embodiment of the present disclosure;
FIG. 2 is a schematic cross-sectional structural diagram of a terminal device according to an embodiment of the present disclosure;
FIG. 3 is a schematic partially enlarged structural diagram of the terminal device shown in FIG. 2;
FIG. 4 is a schematic structural diagram of an optical fiber according to an embodiment of the present disclosure;
FIG. 5 shows principle of total reflection of light when the incident angle θ0 is smaller than the critical angle;
FIG. 6 shows principle of total reflection of light when the incident angle θ0 is equal to the critical angle;
FIG. 7 shows the principle of total reflection of light when the incident angle θ0 is greater than the critical angle;
FIG. 8 is a schematic diagram showing a relationship between a field of view (FOV) of a lens of a camera and a critical angle of total reflection of a light transmitting element; and
FIG. 9 is a schematic partial cross-sectional structural diagram of a terminal device according to an embodiment of the present disclosure.

### DETAILED DESCRIPTION

Some embodiments of the present disclosure will be described in further detail with reference to the accompanying drawings, to present the objects, technical solutions, and advantages of the present disclosure more clearly.

Some embodiments of the present disclosure provide a terminal device. The terminal device may be an electronic device with a front camera function, such as a mobile phone, a tablet computer, a television, a laptop computer, a digital photo frame, and the like. The front camera function refers to a function of enabling the capture of an image for an object in front (that is, the orientation of the front side) of the front side (that is, the side where the display screen is located) of the terminal device.

In the related art, in order to place the front camera below the display panel without occupying the screen area of the terminal device, one way is to improve the display panel so that the display panel may have a transparent area which opposite the front camera, and thus light can pass through the display panel and reach a lens of the front camera. Another way is to use a mechanical structure to lift the front camera up and down. The front camera can be exposed when it is needed. When the front camera is not needed, it can be hidden inside the terminal device.

However, the improvement on the display panel makes the structure and manufacturing process of the display panel complicated, and increases the cost of the terminal device. When adopting a mechanical structure to lift the front camera, the position of lifting is prone to dust accumulation, and will also increase the cost of the terminal device.

In the present disclosure, by providing a light transmitting element in the terminal device and arranging one end of the light transmitting element to be connected to the lens of the camera and the other end thereof to be opposite to the light transmitting hole of the cover plate, the light from an external object can be transmitted, by the light transmitting element, to the lens of the camera so as to complete the light path design of the front camera. Meanwhile, the display panel is parallel to the cover plate, and an orthographic projection of the camera onto the cover plate is located within an orthographic projection of the display panel onto the cover plate, that is, the camera is located below the display panel, as such, the display panel can be used to shield the camera and there is no need to dispose a light shielding area on the cover to shield the camera, thereby reducing the area of the light shielding area and increasing the screen-to-body ratio of the terminal device.

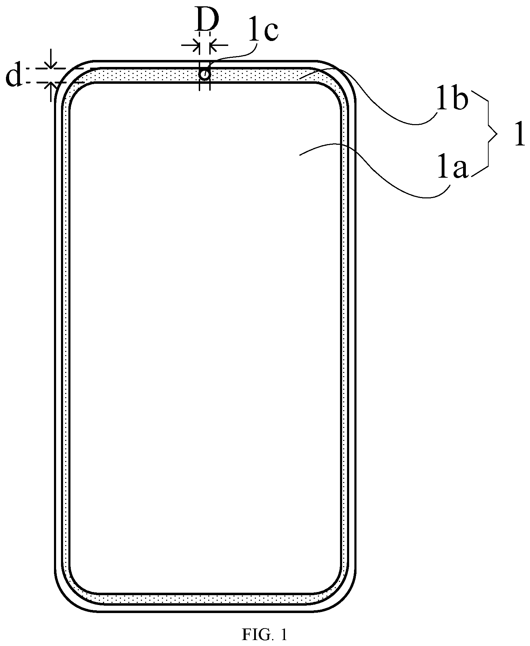

FIG. 1 is a schematic front view structural diagram of an apparatus, which may be a terminal device according to an embodiment of the present disclosure. As shown in FIG. 1, the terminal device includes a cover plate 1. The cover plate 1 has a transparent middle area 1a and an opaque light shielding area 1b surrounding the middle area 1a. The light shielding area 1b has a light transmitting hole 1c.

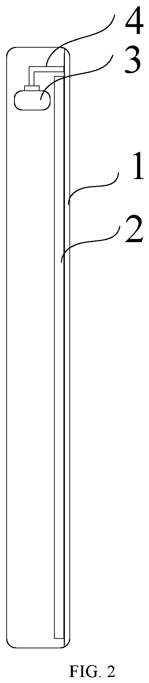

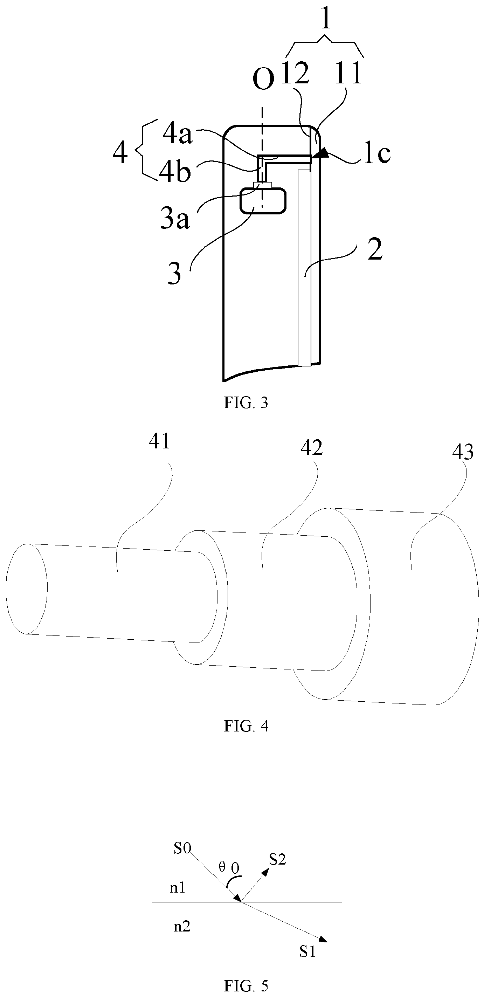

FIG. 2 is a schematic structural diagram of a terminal device according to an embodiment of the present disclosure. FIG. 3 is a schematic partially enlarged structural diagram of the terminal device shown in FIG. 2. As shown in FIG. 2 and FIG. 3, the terminal device comprises a housing and further includes a display panel 2, a sensor such as a camera 3, and a light transmitting element 4. The display panel 2 is disposed next to the cover plate 1. In one example, the display panel 2 is parallel to the cover plate 1.

A projection of the camera 3 is at least partially located within the display panel 2. Preferably, the projection of the camera 3 is completely located within the display panel 2. In other words, the projection of the camera 3 is at least partially located in the area of the display panel 2 and consequently the camera 3 is located below the display panel 2 within the housing of the terminal. In one example, an orthographic projection of the camera 3 onto the cover plate 1 is located within an orthographic projection of the display panel 2 onto the cover plate 1. One end of the light transmitting element 4 is connected to a lens 3a of the camera 3. The other end of the light transmitting element 4 is opposite to the light transmitting hole 1c. In one or more embodiments, the other end of the light transmitting element 4 is connected to the light transmitting hole 1c. The light transmitting element 4 is configured to transmit light from an external object to the lens 3a of the camera 3. In other words, the light transmitting element 4 is configured to transmit external light to the lens 3a of the camera 3.

By providing a light transmitting element in the terminal device and arranging one end of the light transmitting element to be connected to the lens of the camera and the other end thereof to be opposite to the light transmitting hole of the cover plate, the light from an external object can be transmitted, by the light transmitting element, to the lens of the camera so as to complete the light path design of the front camera. Meanwhile, the display panel is disposed next to the cover plate, and an orthographic projection of the camera onto the cover plate is located within an orthographic projection of the display panel onto the cover plate, that is, the camera is located below the display panel, as such, the display panel can be used to shield the camera and there is no need to dispose a light shielding area on the cover to shield the camera, thereby reducing the area of the light shielding area and increasing the screen-to-body ratio of the terminal device.

For example, the display panel 2 is parallel to the cover plate 1, so that the display area of the display panel 2 is disposed opposite to the middle area 1a of the cover plate 1. That is, the orthographic projection of the display area of the display panel 2 onto the cover plate 1 is located in the middle area 1a. Thus, the picture displayed on the display panel 2 can be viewed by a user through the cover plate.

Exemplarily, the cover plate 1 may include a transparent plate 11 and a light shielding layer 12. The light shielding layer 12 is located at an edge area of the transparent plate 11 to form the light shielding area 1b, and a middle area 1a is surrounded by the light shielding layer 12. An opening, i.e., the light transmitting hole 1c, is located in the light shielding layer 12.

The shape of the light shielding area 1b matches the shape of the cover plate 1. For example, as shown in FIG. 1, the cover plate 1 is a rectangular cover plate, and accordingly, the light shielding area 1b has a rectangular ring shape.

Exemplarily, the light transmitting hole 1c is generally located at the top portion of the mobile terminal. The top portion of the mobile terminal refers to an upper portion when the display screen of the mobile terminal is placed vertically. The position of the light transmitting hole 1c can be adjusted according to actual needs.

Alternatively or additionally, the transparent plate 11 may be a glass plate or a plastic plate. Optionally, the light shielding layer 12 may be an ink layer. The ink layer may be formed on the transparent plate by screen printing.

Alternatively or additionally, referring to FIG. 1 again, the maximum inner diameter of the light transmitting hole 1c may be less than or equal to 2 mm, such as between 1 mm to 2 mm. When the maximum inner diameter of the light transmitting hole is small, the width d of the light shielding area is small, which is beneficial for the improvement of the screen-to-body ratio.

Exemplarily, the light transmitting hole 1c is a circular hole, and the diameter D of the light transmitting hole 1c may be between 1 mm to 2 mm. It should be noted that the shape of the light transmitting hole 1c can be set according to actual needs.

Alternatively or additionally, the display panel 2 may be an organic light emitting diode display panel or a liquid crystal display panel, which is not limited in the present disclosure.

Alternatively or additionally, the light transmitting element 4 is configured to transmit, based on the total reflection principle, light from an external object to the lens 3a of the camera 3. The transmission of light from an external object to the lens 3a of the camera 3 based on total reflection facilitates the lossless transmission of the image. In the present disclosure, the light transmitting element 4 refers to an optical fiber.

The optical fiber includes a vertical section 4a perpendicular to the cover plate 1 and a bent section 4b connected to the vertical section 4a at an angle. By bending the optical fiber, the camera can be conveniently placed at any desired position at the back of the display panel 2. In addition, because the fiber is only bent once, the transmission performance will not be affected. It should be noted that, in other embodiments, the number of times the optical fiber is bent may be set according to actual needs, which is not limited in the present disclosure.

Exemplarily, an included angle between the vertical section 4a and the bent section 4b may be 90 degrees. That is, the bent section 4b may be parallel to the display panel 2. In this way, an optical axis direction O of the lens 3a of the camera 3 can be set to be parallel to the cover plate 1 to facilitate the arrangement of the camera 3.

Alternatively or additionally, two ends of the light transmitting element 4 may be adhered to the cover plate 1 and the lens 3a of the camera 3 through optical glue, respectively. In this way, the optical fiber can be fixed and will not move during use, and thus the transmission of light will not be badly influenced.

FIG. 4 is a schematic structural diagram of an optical fiber according to an embodiment of the present disclosure. As shown in FIG. 4, the optical fiber includes a core 41, and a cladding 42 and may comprise a protective sleeve 43 which are sequentially sleeved outside the core 41.

Alternatively or additionally, in some embodiments of the present disclosure, the optical fiber may be a glass optical fiber or a plastic optical fiber. That is, the core 41 may be made of glass or plastic. The cladding 42 may be a glass coating. The cladding 42 causes light to be retained inside the core 41. The protective sleeve 43 may be a plastic sleeve for protecting the cladding 42.

The refractive index of the core 41 is greater than the refractive index of the cladding 42 so that when the incident light satisfies a certain condition, total reflection can occur at an interface between the core 41 and the cladding 42 and then total reflection propagation can be realized in the optical fiber.

Total reflection is an optical phenomenon. When light enters from a medium having a higher refractive index to a medium having a lower refractive index, if the incident angle is greater than the critical angle of total reflection, the refracted light will disappear, and all incident light will be reflected without entering the medium having a low refractive index.

FIG. 5 to FIG. 7 show the principle of total reflection of light, which are not according to the invention and are present for illustration purpose only. In FIG. 5 to FIG. 7, the refractive index of an upper medium is n1, and the refractive index of a lower medium is n2, n1> n2. For ease of description, the upper medium is referred to as an n1 medium and the lower medium is referred to as an n2 medium.

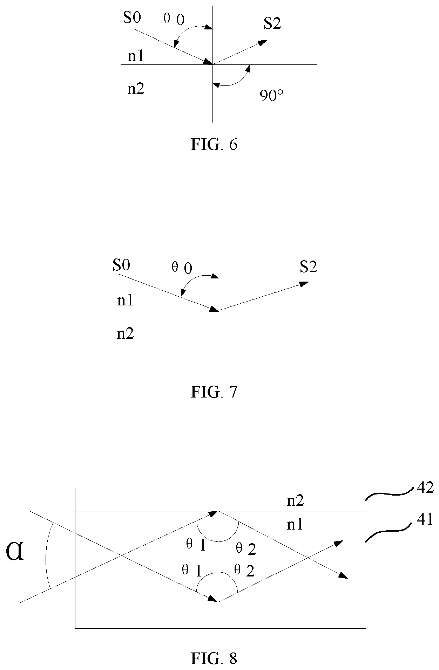

As shown in FIG. 5, when the incident angle θ0 is smaller than the critical angle, the light rays S0 simultaneously undergo refraction S1 into the n2 medium and reflection S2 into the n1 medium. As shown in FIG. 6, when the incident angle θ0 is equal to the critical angle, the light rays S0 undergo refraction (not shown) into the n2 medium and reflection S2 into the n1 medium at the same time, and the refraction angle is 90°. As shown in FIG. 7, when the incident angle θ0 is greater than the critical angle, the light rays refracted into the n2 medium disappear, and all the light rays S2 are reflected into the n1 medium.

The lens 31 of the camera 3 has a field of view (FOV) which is used to indicate the field range of view of the lens 31. In order to prevent the total reflection angle range of the optical fiber from affecting the FOV of the lens 31 of the camera 3, through selection on the core and cladding materials with suitable refractive indexes, the angle range of the incident light that can be totally reflected in the optical fiber can be set as equal to the FOV.

FIG. 8 is a schematic diagram showing a relationship between a FOV of a lens of a camera and a critical angle of total reflection of a light transmitting element. As shown in FIG. 8, formula (1) can be derived from the geometric relationship: $α = 180 ° - 2 * θ 1$ (1),
where θ1 = θ2 = θc, θ1 is the angle of incident light, θ2 is the angle of reflected light, and θc is the critical angle of total reflection.

Therefore, by controlling the total reflection critical angle θc of the optical fiber, the angle range of the incident light that can be totally reflected in the optical fiber can be accordingly controlled. That is, the total reflection critical angle θc of the optical fiber may be equal to one-half of the complement angle of the FOV α of the lens 3a of the camera 3.

It can be known from the refractive index formula that $sin \left(θ1\right) = sin \left(θ2\right) = n 1 / n 2$ (2),
where n1 is the refractive index of the core, n2 is the refractive index of the cladding, and the sine of the total reflection critical angle θc is equal to the ratio of the refractive index of the core 41 to the refractive index of the cladding 42. It can be seen that the critical angle of total reflection can be set by controlling the refractive indexes of the cladding and the core.

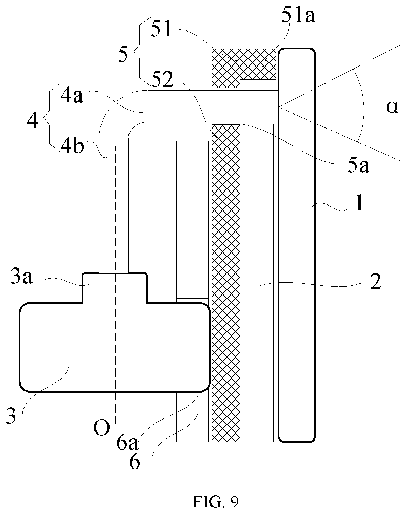

FIG. 9 is a schematic partial cross-sectional structural diagram of a terminal device according to an embodiment of the present disclosure. Referring to FIG. 9 which shows a structure different from the structure shown in FIG. 2. In FIG. 9, the terminal device further includes a middle frame 5, the cover plate 1 and the camera 3 are separately located on two sides of the middle frame 5, the middle frame 5 has a mounting hole 5a, and the light transmitting element 4 passes through the mounting hole 5a.

By providing the mounting hole 5a in the middle frame 5, the position of the light transmitting element 4 can be further restricted, and the stability of the structure can be improved.

As shown in FIG. 9, the middle frame 5 includes a support frame 51 and a bottom plate 52. The mounting hole 5a is located in the bottom plate 52 and is close to an inner side wall 51a of the support frame 51. The inner side wall 51a refers to a side wall of the support frame 51 surrounding the display panel 2 and opposite to the display panel 2.

The display panel 2 may be fixedly connected to the cover plate 1, such as by glue bonding, and the cover plate 1 is fixedly connected to the middle frame 5 (for example, to the supporting surface of the support frame 51), thereby fixing the display panel 2 on the middle frame 5.

The shape of the support frame 51 matches the shape of the cover plate 1. For example, when the cover plate 1 is rectangular, the support frame 51 may be a rectangular frame. When the cover plate 1 is circular, the support frame 51 may be a circular frame.

Alternatively or additionally, the terminal device may further include a motherboard 6 located on the middle frame 5 and electrically connected to the camera 3. The motherboard 6 can be configured to receive images collected by the camera 3 and control the actions of the camera 3.

Alternatively or additionally, the motherboard 6 and the camera 3 may be located on the same side of the middle frame 5, so that the internal structure of the mobile terminal can be compact, which is beneficial to the reduction of the thickness of the mobile terminal.

When the motherboard 6 and the camera 3 are located on the same side of the middle frame 5, interference may occur between the motherboard 6 and the camera 3 in some cases, for example, when the motherboard 6 is large, or the positions of the motherboard 6 and the camera 3 conflict. In these cases, the motherboard 6 may be provided a camera avoidance hole 6a. As such, the camera 3 can be arranged in the camera avoidance hole 6a and fixedly connected to the middle frame 5, so that the thickness of the terminal device can be reduced.

**In** some other embodiments, the motherboard 6 and the camera 3 do not interfere, and thus there is no need to dispose a camera avoidance hole 6a, and the camera 3 can be directly installed on the middle frame 5.

Exemplarily, the camera 3 and the middle frame 5 may be connected in a manner including, without limitations, bonding, bolting connection or the like.

**In** some embodiments of the present disclosure, a terminal device which is an electronic device is provided. The terminal device includes:
a cover plate having a transparent middle area and an opaque light shielding area surrounding the middle area, the light shielding area having a light transmitting hole;
a display panel parallel to the cover plate;
a camera, an orthographic projection of the camera onto the cover plate being located within an orthographic projection of the display panel onto the cover plate; and
a light transmitting element, one end of the light transmitting element being connected to a lens of the camera, and the other end of the light transmitting element being opposite to the light transmitting hole, and the light transmitting element being configured to transmit an external image to the lens of the camera.

The light transmitting element includes an optical fiber, and the optical fiber includes a vertical section perpendicular to the cover plate and a bent section connected to the vertical section at an angle.

Optionally, an optical axis direction of the lens of the camera is parallel to the cover plate.

Optionally, two ends of the light transmitting element are bonded to the cover plate and the lens of the camera respectively through an optical glue.

Optionally, the light transmitting element is configured to transmit an external image to the lens of the camera based on total reflection, and a critical angle of total reflection of the light transmitting element is equal to one-half of a complement angle of a field of view of the lens of the camera.

The light transmitting element includes an optical fiber, the optical fiber includes a core, and a cladding and a protective sleeve sequentially sleeved outside the core, and a sine value of the critical angle of total reflection is equal to a ratio of a refractive index of the core to a refractive index of the cladding.

The terminal device further includes a middle frame, wherein the cover plate and the camera are separately located at two sides of the middle frame, the middle frame has a mounting hole, and the light transmitting element passes through the mounting hole.

Optionally, the terminal device further includes a motherboard, wherein the motherboard is electrically connected to the camera, and the motherboard is located on the middle frame.

Optionally, the motherboard and the camera are located on a same side of the middle frame, the motherboard has a camera avoidance hole, and the camera is located in the camera avoidance hole.

Optionally, the maximum inner diameter of the light transmitting hole is less than or equal to 2 mm.

The technical solutions provided by the embodiments of the present disclosure may include the following benefits.

By providing a light transmitting element in the terminal device and arranging one end of the light transmitting element to be connected to the lens of the camera and the other end thereof to be opposite to the light transmitting hole of the cover plate, the external image can be transmitted, by the light transmitting element, to the lens of the camera so as to complete the light path design of the front camera. Meanwhile, the display panel is parallel to the cover plate, and an orthographic projection of the camera onto the cover plate is located within an orthographic projection of the display panel onto the cover plate, that is, the camera is located below the display panel, as such, the display panel can be used to shield the camera and there is no need to dispose a light shielding area on the cover to shield the camera, thereby reducing the area of the light shielding area and increasing the screen-to-body ratio of the terminal device.

## Claims

1. A terminal device, comprising:
a cover plate (1) having a transparent middle area (1a) and an opaque light shielding area (1b) at least partially surrounding the middle area (1a), the light shielding area (1b) having a light transmitting hole (1c);
a display panel (2) disposed next to the cover plate (1) and parallel to the cover plate (1);
a camera (3), having a lens (3a), wherein a projection of the camera (3) onto the cover plate (1) is at least partially located within a projection of the display panel (2) onto the cover plate (1); and
an optical fiber (4), comprising a first end and a second end, the first end of the optical fiber (4) being connected to the lens (3a) of the camera (3), and the second end of the optical fiber (4) being opposite to the light transmitting hole (1c);
and the terminal device **characterized in that**:
the terminal device further comprising a middle frame (5), wherein the middle frame (5) comprises a support frame (51) and a bottom plate (52), the cover plate (1) and the display panel (2) are at the same side of the bottom plate (52) in a thickness direction of the bottom plate (52), the display panel (2) is fixedly connected to the cover plate (1) and the cover plate (1) is fixedly connected to the support frame (51) wherein the display panel (2) is fixed on the middle frame (5), the display panel (2) is between the cover plate (1) and the bottom plate (52), the support frame (51) has a side wall (51a) which surrounds the display panel (2) and is opposite to the display panel (2), the bottom plate (52) has a mounting hole (5a) which is next to the side wall (51a) of the support frame (51), the optical fiber (4) passes through the mounting hole (5a), and the second end of the optical fiber (4) is between the side wall (51a) of the support frame (51) and the display panel (2).

2. The terminal device according to claim 1, wherein the optical fiber comprises a vertical section (4a) perpendicular to the cover plate (1) and a bent section (4b) connected to the vertical section (4a) at an angle.

3. The terminal device according to claim 1 or 2, wherein an optical axis direction (O) of the lens (3a) of the camera (3) is parallel to the cover plate (1).

4. The terminal device according to any one of preceding claims, further comprising a motherboard (6), wherein the motherboard (6) is electrically connected to the camera (3), and the motherboard (6) is located on the middle frame (5).

5. The terminal device according to any one of preceding claims, wherein the motherboard (6) and the camera (3) are located on a same side of the middle frame (5), the motherboard (6) has a camera avoidance hole (6a), and the camera (3) is located in the camera avoidance hole (6a).

6. The terminal device according to any one of preceding claims, wherein an inner diameter of the light transmitting hole (1c) is less than or equal to 2 mm.

## Patentansprüche

1. Endgerät, umfassend:
eine Abdeckplatte (1), die einen transparenten mittleren Bereich (1a) und einen lichtundurchlässigen Lichtabschirmbereich (1b) aufweist, der den mittleren Bereich (1a) zumindest teilweise umgibt, wobei der Lichtabschirmbereich (1b) ein Lichtdurchlassloch (1c) aufweist;
ein Anzeigepanel (2), das benachbart zu der Abdeckplatte (1) und parallel zu der Abdeckplatte (1) angeordnet ist;
eine Kamera (3), die eine Linse (3a) aufweist, wobei eine Projektion der Kamera (3) auf die Abdeckplatte (1) zumindest teilweise innerhalb einer Projektion des Anzeigepanels (2) auf die Abdeckplatte (1) liegt; und
eine Lichtleitfaser (4), die ein erstes Ende und ein zweites Ende aufweist, wobei das erste Ende der Lichtleitfaser (4) mit der Linse (3a) der Kamera (3) verbunden ist und das zweite Ende der Lichtleitfaser (4) dem Lichtdurchlassloch (1c) gegenüberliegt;
und **dadurch gekennzeichnet, dass**
das Endgerät ferner einen Mittelrahmen (5) umfasst, wobei der Mittelrahmen (5) einen Stützrahmen (51) und eine Bodenplatte (52) umfasst, die Abdeckplatte (1) und das Anzeigepanel (2) in einer Dickenrichtung der Bodenplatte (52) auf derselben Seite der Bodenplatte (52) angeordnet sind, das Anzeigepanel (2) fest mit der Abdeckplatte (1) verbunden ist und die Abdeckplatte (1) fest mit dem Stützrahmen (51) verbunden ist, wobei das Anzeigepanel (2) an dem Mittelrahmen (5) befestigt ist, das Anzeigepanel (2) zwischen der Abdeckplatte (1) und der Bodenplatte (52) angeordnet ist, der Stützrahmen (51) eine Seitenwand (51a) aufweist, die das Anzeigepanel (2) umgibt und dem Anzeigepanel (2) gegenüberliegt, die Bodenplatte (52) ein Montageloch (5a) aufweist, das benachbart zu der Seitenwand (51a) des Stützrahmens (51) angeordnet ist, die Lichtleitfaser (4) durch das Montageloch (5a) hindurchverläuft und das zweite Ende der Lichtleitfaser (4) zwischen der Seitenwand (51a) des Stützrahmens (51) und dem Anzeigepanel (2) angeordnet ist.

2. Endgerät nach Anspruch 1, wobei die Lichtleitfaser einen Vertikalabschnitt (4a), der senkrecht zu der Abdeckplatte (1) verläuft, und einen gebogenen Abschnitt (4b) umfasst, der unter einem Winkel mit dem Vertikalabschnitt (4a) verbunden ist.

3. Endgerät nach Anspruch 1 oder 2, wobei eine optische Achsenrichtung (O) der Linse (3a) der Kamera (3) parallel zur Abdeckplatte (1) ist.

4. Endgerät nach einem der vorhergehenden Ansprüche, ferner umfassend eine Hauptplatine (6), wobei die Hauptplatine (6) elektrisch mit der Kamera (3) verbunden ist und die Hauptplatine (6) auf dem Mittelrahmen (5) angeordnet ist.

5. Endgerät nach einem der vorhergehenden Ansprüche, wobei die Hauptplatine (6) und die Kamera (3) auf derselben Seite des Mittelrahmens (5) angeordnet sind, die Hauptplatine (6) eine Ausweichöffnung (6a) für die Kamera aufweist und die Kamera (3) in der Ausweichöffnung (6a) angeordnet ist.

6. Endgerät nach einem der vorhergehenden Ansprüche, wobei ein Innendurchmesser des Lichtdurchlasslochs (1c) kleiner als oder gleich 2 mm ist.

## Revendications

1. Dispositif terminal, comprenant :
une plaque de couverture (1) comportant une zone centrale transparente (1a) et une zone de protection contre la lumière opaque (1b) entourant au moins partiellement la zone centrale (1a), la zone de protection contre la lumière (1b) comportant un trou de transmission de lumière (1c) ;
un écran d'affichage (2) disposé à proximité de la plaque de couverture (1) et parallèle à la plaque de couverture (1) ;
une caméra (3), comportant une lentille (3a), dans lequel une projection de la caméra (3) sur la plaque de couverture (1) est située au moins partiellement à l'intérieur d'une projection de l'écran d'affichage (2) sur la plaque de couverture (1) ; et
une fibre optique (4), comprenant une première extrémité et une seconde extrémité, la première extrémité de la fibre optique (4) étant connectée à la lentille (3a) de la caméra (3), et la seconde extrémité de la fibre optique (4) étant opposée au trou de transmission de lumière (1c) ;
et le dispositif terminal étant **caractérisé en ce que** :
le dispositif terminal comprend en outre un châssis intermédiaire (5), dans lequel le châssis intermédiaire (5) comprend un châssis de support (51) et une plaque de fond (52), la plaque de couverture (1) et l'écran d'affichage (2) sont du même côté de la plaque de fond (52) dans une direction d'épaisseur de la plaque de fond (52), l'écran d'affichage (2) est relié à demeure à la plaque de couverture (1) et la plaque de couverture (1) est fixée à demeure au châssis de support (51), dans lequel
l'écran d'affichage (2) est fixé sur le châssis intermédiaire (5), l'écran d'affichage (2) est situé entre la plaque de couverture (1) et la plaque de fond (52), le châssis de support (51) comporte une paroi latérale (51a) qui entoure l'écran d'affichage (2) et qui est opposée à l'écran d'affichage (2), la plaque de fond (52) comporte un trou de montage (5a) qui est à proximité de la paroi latérale (51a) du châssis de support (51), la fibre optique (4) traverse le trou de montage (5a), et la seconde extrémité de la fibre optique (4) est située entre la paroi latérale (51a) du châssis de support (51) et l'écran d'affichage (2).

2. Dispositif terminal selon la revendication 1, dans lequel la fibre optique comprend une section verticale (4a) perpendiculaire à la plaque de couverture (1) et une section coudée (4b) reliée à la section verticale (4a) à un certain angle.

3. Dispositif terminal selon la revendication 1 ou la revendication 2, dans lequel une direction d'axe optique (O) de la lentille (3a) de la caméra (3) est parallèle à la plaque de couverture (1).

4. Dispositif terminal selon l'une quelconque des revendications précédentes, comprenant en outre une carte mère (6), dans lequel la carte mère (6) est connectée électriquement à la caméra (3), et la carte mère (6) est située sur le châssis intermédiaire (5).

5. Dispositif terminal selon l'une quelconque des revendications précédentes, dans lequel la carte mère (6) et la caméra (3) sont situées d'un même côté du châssis intermédiaire (5), la carte mère (6) comporte un trou d'évitement de caméra (6a), et la caméra (3) est située dans le trou d'évitement de caméra (6a).

6. Dispositif terminal selon l'une quelconque des revendications précédentes, dans lequel un diamètre intérieur du trou de transmission de lumière (1c) est inférieur ou égal à 2 mm.
